# EUROPEAN PATENT SPECIFICATION

(11) **EP 1 319 334 B1**
(45) Date of publication and mention of the grant of the patent: **24.01.2007**
(21) Application number: 02027660.6
(22) Date of filing: 12.12.2002
(51) Int. Cl.: A01K 93/00

(54) **Angling float**
Floss zum Angeln
Flotteur pour la pêche

(30) Priority: 15.12.2001 GB 0130045
(43) Date of publication of application: 18.06.2003
(73) Proprietor: Drennan International Limited, Oxford, OX 2EX (GB)
(72) Inventor: Drennan, Peter John, Cuddesdon, Oxon, OX44 9HG (GB); Brownlow, Peter John, Marsh Baldon, Oxon, OX44 9LJ (GB)
(74) Representative: Clayton-Hathway, Anthony Nicholas

(56) References cited:
- US-A- 2 236 215
- US-A- 2 293 800
- US-A- 2 548 355

## Description

The present invention relates to angling floats, and in particular relates to the means of attachment of a float to a fishing line.

Conventionally, angling floats are generally attached to fishing lines by means of a ring through which the line freely extends, and the line is fixed to the float at a point below the ring by being trapped between the float body and a resilient band (e.g. formed from silicone rubber) placed over the body. The ring is positioned on the float body such that it is above the surface of the water in use, whereas the resilient band is below the water surface. A brightly coloured (or otherwise marked) antenna typically projects from the top of the float body above the ring. When a fish takes the bait or otherwise moves the line in the water, the float is tipped, and this is clearly visible from movement of the antenna.

In conventional floats, the ring through which the fishing line extends is generally attached to the main body of the float by means of a pin section projecting from the ring, which is retained by adhesive in a hole provided in the main body. This method of attachment, however, is unsatisfactory because the ring sometimes becomes detached from the main body of the float during the act of catching a fish.

United States Patent No. 2,293,800 discloses a float comprising a stem, a sleeve located on an elongate upper end of the stem in a mating engagement, and a hitch made of wire, for retaining the float on a fishing line in use. The hitch is attached to the upper end of the stem of the float by being trapped between the stem and the sleeve.

The present invention seeks to provide an angling float in which the means by which the float is retained on a fishing line in use is more secure than hitherto, and in particular the invention seeks to provide an angling float which does not suffer from the above problem.

Accordingly, a first aspect of the present invention provides an angling float comprising: (a) a main body including an elongate first attachment part; (b) a second attachment part generally in the form of a collar located on the elongate first attachment part in a mating engagement; and (c) a retaining member for retaining the float on a fishing line in use; wherein the retaining member is attached to the main body by being trapped between the first and second attachment parts; characterised in that the second attachment part collar is retained on the elongate first attachment part by being trapped between a flange or other projection of the first attachment part and a part of the main body.

A second aspect of the invention provides a kit of parts for forming a float according to the first aspect of the invention, comprising a said main body, first attachment part, second attachment part and retaining member.

The invention has the advantage that because the retaining member is trapped between the first and second attachment parts, it may be more securely attached to the main body of the float than is the case with conventional floats.

Preferred and optional features of the invention are described and illustrated below, and described in the dependent claims.

The invention will now be described, by way of example, with reference to the accompanying drawings, of which:
Figure 1 shows a top region of an embodiment of an angling float according to the invention;
Figure 2 shows an embodiment of a first attachment part of a float according to the invention;
Figure 3 shows an embodiment of a second attachment part of a float according to the invention;
Figure 4 shows, schematically, an embodiment of a retaining member being trapped between first and second attachment parts of a float according to the invention; and
Figure 5 shows an alternative embodiment of a first attachment part of a float according to the invention.

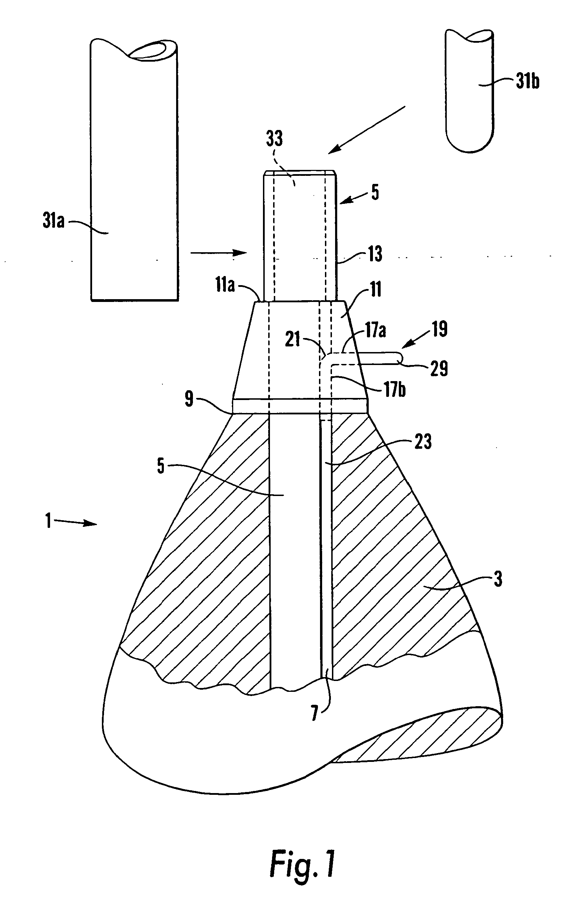

Figure 1 shows a top region of an embodiment of an angling float 1 according to the invention. The float 1 comprises a main body 3 formed from balsa-wood (or some other buoyant material, e.g. a plastics material), only a top region of which is shown. The shape of the main body 3 is conventional except for the top region which is illustrated. The main body 3 includes a first attachment part 5 which comprises a separate elongate injection moulded plastics (e.g. polycarbonate or other strong polymer) part 5 which is received within an axial bore 7 which extends from a top end 9 of the remainder of the main body. The elongate first attachment part 5 is fixed to the remainder of the main body 3 in the bore 7 by means of adhesive (e.g. "superglue").

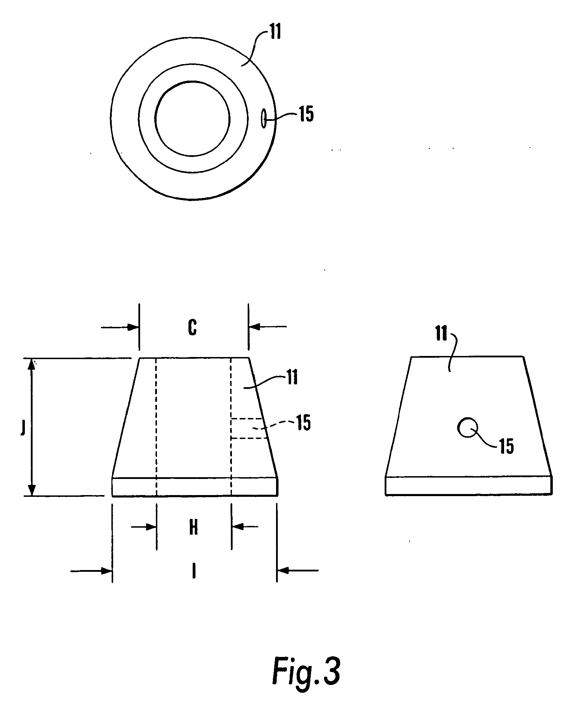

A portion of the elongate first attachment part 5 projects above the remainder of the main body 3, and mated with this portion is a second attachment part 11 in the form of a tapered collar. The second attachment part 11 is also injection moulded from plastics material (e.g. polycarbonate or other strong polymer). The second attachment part 11 is retained in its mating engagement with the first attachment part by means of a flange 13 provided in an upper section of the projecting portion of the first attachment part. The second attachment part 11 includes an orifice 15 (see Figure 3) which extends in a direction substantially perpendicular to the axis of the collar, from the interior to the exterior of the collar. A connecting portion 17 of a retaining member 19 extends through the orifice 15 from the exterior to the interior of the collar 11. The connecting portion 17 includes a bend 21 between a section 17a of the retaining portion extending through the orifice 15 and another section 17b of the retaining portion trapped between the first and second attachment parts 5 and 11. The bend 21 substantially prevents removal of the retaining member 19 from the main body 3 of the float 1.

The section 17b of the connecting portion of the retaining member 19 which is trapped between the elongate first attachment part 5 and the interior of the second attachment part collar 11, is trapped in a gap 23 between these two parts which is specifically provided for this purpose. The gap 23 is provided by means of a cut-away substantially flat surface 25 on the otherwise substantially right cylindrical surface 27 of that portion of the first attachment part 5 which is received in the axial bore 7 of the remainder of the main body 3, and by virtue of the interior of the second attachment part being substantially right cylindrical (i.e. substantially circular in cross-section). The retaining member 19 is formed from metal wire (e.g. stainless steel) and comprises a retaining portion 29 in the form of a ring through which a fishing line (not shown) freely extends in use, and the connecting portion 17 (already referred to) extending therefrom.

Also shown in Figure 1 are a pair of float antennae 31a and 31b (only bottom portions of which are illustrated). Such antennae are preferably supplied with the float as part of a kit, or separately. Antenna 31a is in the form of a relatively large diameter hollow cylinder which is arranged to be received as an interference fit on flange 13 of the elongate first attachment part 5, such that it seats against the top edge 11 a of the second attachment part 11. Antenna 31 b is in the form of a relatively small diameter cylinder (which may, or may not, be hollow) which is arranged to be received as an interference fit in an axial opening 33 provided in the flange 13 of the elongate first attachment part. The antennae are preferably brightly coloured or otherwise distinctively marked, so that the float may be clearly seen, and identified, in use by the angler and other anglers using the same stretch of water. Because antennae may be removably attached to the float, the angler may select the colour or other markings depending upon the conditions and upon the markings of other floats being used at the time. Additionally, because the flange may receive different cross-sectional sizes of antennae, the angler may select such different sizes of antennae as desired or required.

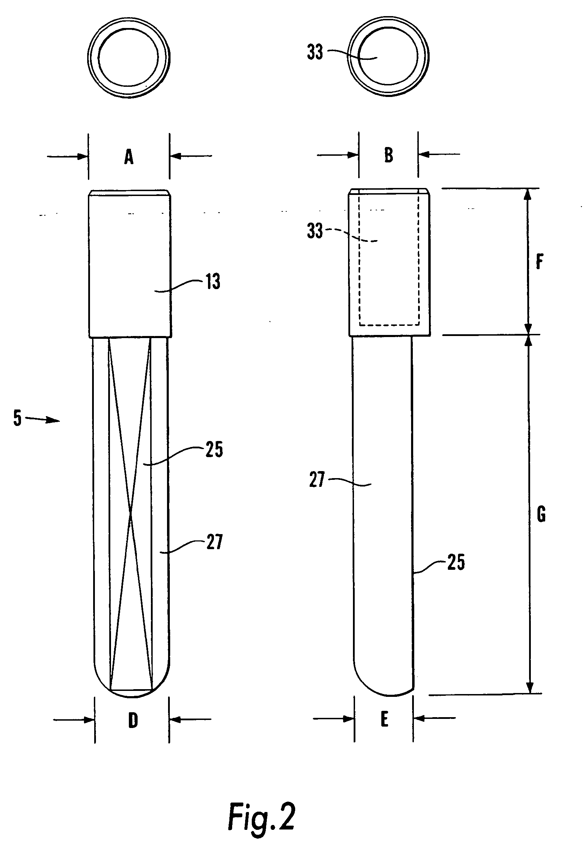

Figure 2 shows two views of the first elongate attachment part 5 shown in Figure 1 and described above. Diameter A is preferably in the range 2-4mm, more preferably 2-3mm, for example 2.2mm or 2.5mm. Diameter B is preferably in the range of 1-3mm, more preferably 1-2mm. For example, if diameter A is 2.2mm then diameter B is preferably 1.5mm; if diameter A is 2.5mm then diameter B is preferably 1.8mm. Diameter D is preferably in the range 1.5 - 3.00mm, for example 2.0mm. Dimension E is preferably in the range 1.0 - 2.0mm, for example 1.5mm. Dimension F is preferably in the range 2 - 10mm, for example 4mm. Dimension G is preferably in the range 6 - 20mm, for example 10mm.

Figure 3 shows three views of the second attachment part collar shown in Figure1 and described above. Diameter C is preferably in the range 2.5 - 4.0mm, for example 2.8mm or 3.3mm. Diameter H is preferably sized such that diameter D forms an interference fit with it, for example 2.05mm (if D is 2.0mm). Diameter I is preferably in the range 3.0 - 5.0mm, for example 4.2mm. Dimension J is preferably in the range 3.0 - 5.0mm, for example 3.5mm. The diameter of the orifice 15 is preferably in the range 0-3 - 1.0mm, for example 0.5mm.

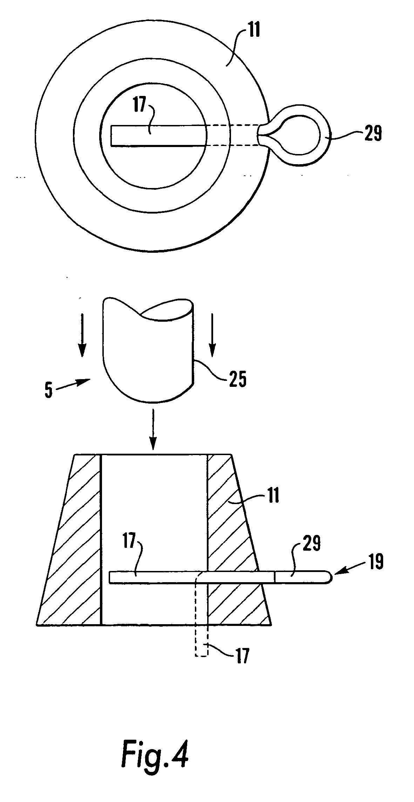

Figure 4 shows, schematically in side and plan views, an example of how the first and second attachment parts are assembled together such that they trap the retaining member 19 between them. Preferably the retaining member 19 (and specifically the connecting portion 17 thereof) initially does not include a bend 21 but is substantially straight as shown. The elongate first attachment part 5 is preferably inserted (as indicated by the arrows) into the second attachment part collar 11 in a mating fashion. The (straight) retaining member has preferably been pre-inserted into the orifice 15 in the second attachment part 11 such that it extends into the hollow interior thereof. The retaining member 19 is preferably bendable, and is preferably formed from metal wire. Insertion of the first attachment part 5 into the second attachment part 11 therefore preferably causes the connection portion 17 of the retaining member 19 to bend as shown in dashed outline, thereby causing section 17b thereof to be trapped in the gap 23 created by the flat surface 25, as shown in Figure 1.

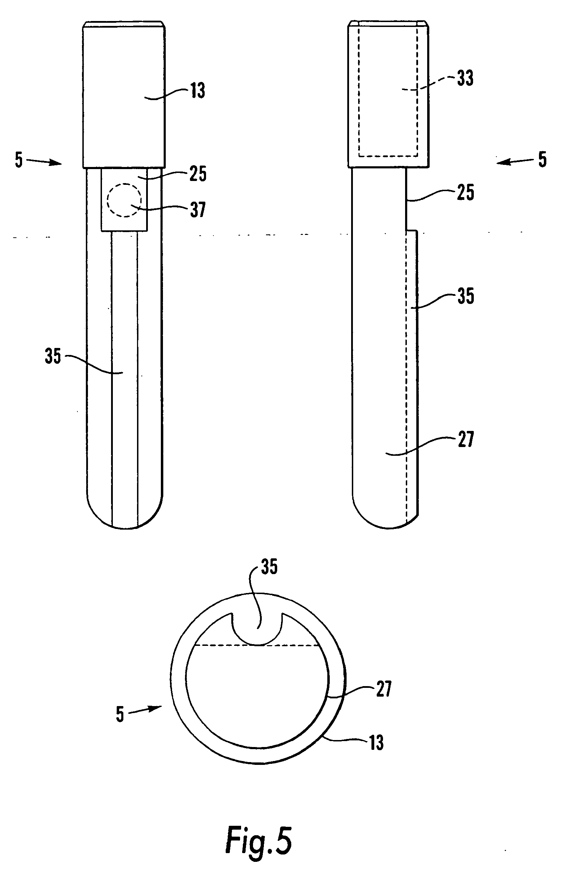

Figure 5 shows side and plan (from below) views of an alternative embodiment of a first attachment part 5 of a float 1 according to the invention. This alternative embodiment of the first attachment part 5 is substantially identical to that shown in figures 1 and 2, except that in this embodiment the cut-away substantially flat surface 25 extends only a short distance below the flange 13, and below this flat region 25 a groove 35 is provided. The groove 35, which is preferably generally U-shaped in cross-section is arranged to receive the connecting portion 17 of the retaining member 19 and to trap the connecting portion 17 between the first and second attachment parts (i.e. the groove 35 provides a gap 23 between the first and second attachment parts). A particular advantage of the groove 35 is that lateral displacement of the connecting portion 17 of the retaining member is substantially prevented by the connecting portion being confined in the groove. Also shown in Figure 5 is a marking 37 which is a remnant of the injection moulding process (i.e. an ejector pin mark).

## Claims

1. An angling float (1) comprising:
(a) a main body (3) including an elongate first attachment part (5);
(b) a second attachment part (11) generally in the form of a collar located on the elongate first attachment part (5) in a mating engagement; and
(c) a retaining member (19) for retaining the float on a fishing line in use; wherein the retaining member is attached to the main body (3) by being trapped between the first (5) and second (11) attachment parts;
**characterised in that** the second attachment part collar (11) is retained on the elongate first attachment part (5) by being trapped between a flange (13) or other projection of the first attachment part (5) and a part of the main body (3).

2. A float (1) according to claim 1, in which the first attachment part (5) is separate from the remainder of the main body (3) but fixed thereto.

3. A float(1) according to claim 2, in which the first attachment part (5) is fixed to the remainder of the main body (3) in a bore (7) thereof.

4. A float (1) according to any preceding claim, in which the retaining member (19) comprises a retaining portion (29) which retains the float on a fishing line in use, and a connecting portion (17) extending from the retaining portion, the connecting portion (17) being trapped between the first (5) and second (11) attachment parts, and the retaining portion (29) protruding from the first and second attachment parts.

5. A float (1) according to Claim 4, in which the retaining portion (29) of the retaining member (19) comprises a ring, loop or hook through which a fishing line extends in use.

6. A float (1) according to Claim 4 or Claim 5, in which the second attachment part (11) includes an orifice (15) through which the connecting portion (17) of the retaining member (19) extends such that it is trapped between the first (5) and second (11) attachment parts.

7. A float (1) according to Claim 6, in which the connecting portion (17) of the retaining member (19) includes a bend (21) between a section (17a) thereof extending through the orifice (15) and another section (17b) thereof trapped between the first (5) and second (11) attachment parts, the bend substantially preventing removal of the retaining member from the main body (3) during use.

8. A float (1) according to any one of claims 4 to 7, in which the elongate first attachment part (5) and the interior of the second attachment part collar (11) are so arranged that the connecting portion (17) of the retaining member (19) is trapped in a gap (23) between them, provided for this purpose.

9. A float (1) according to any preceding claim, in which a section of the first attachment part (5) projects from the second attachment part (11) and the remainder of the main body (3), said section comprising joining means by which a float antenna (31 a, 31 b) may be removably joined to the float.

10. A kit of parts for forming a float (1) according to any preceding claim, comprising a said main body (3), first attachment part (5), second attachment part (11) and retaining member (19).

11. A kit according to Claim 10 when dependent upon Claim 9, further comprising at least one said antenna (31 a, 31 b).

## Patentansprüche

1. Angelpose (1), die Folgendes umfasst:
(a) einen Hauptkörper (3) mit einem länglichen ersten Befestigungsteil (5),
(b) einen zweiten Befestigungsteil (11), der in der Regel in Form eines Kragens vorliegt, der sich auf dem länglichen ersten Befestigungsteil (5) befindet und in diesen passend eingreift, und
(c) ein Halteelement (19) für das Halten der Pose an einer Angelschnur im Gebrauch, wobei das Halteelement an dem Hauptkörper (3) befestigt ist, indem es zwischen dem ersten (5) und dem zweiten (11) Befestigungsteil eingeschlossen ist,
**dadurch gekennzeichnet, dass** der Kragen des zweiten Befestigungsteils (11) an dem länglichen ersten Befestigungsteil (5) gehalten wird, indem er zwischen einem vorspringenden Rand (13) oder einem anderen Vorsprung des ersten Befestigungsteils (5) und einem Teil des Hauptkörpers (3) eingeschlossen wird.

2. Pose (1) nach Anspruch 1, bei der der erste Befestigungsteil (5) von dem Rest des Hauptkörpers (3) getrennt, jedoch daran befestigt ist.

3. Pose (1) nach Anspruch 2, bei der der erste Befestigungsteil (5) an dem Rest des Hauptkörpers (3) in einer Bohrung (7) davon befestigt ist.

4. Pose (1) nach einem der vorhergehenden Ansprüche, bei der das Halteelement (19) einen Halteabschnitt (29) umfasst, der die Pose im Gebrauch an einer Angelschnur hält, und einen Verbindungsabschnitt (17), der sich von dem Halteabschnitt aus erstreckt, wobei der Verbindungsabschnitt (17) zwischen dem ersten (5) und dem zweiten (11) Befestigungsteil eingeschlossen ist und der Halteabschnitt (29) von dem ersten und dem zweiten Befestigungsteil vorragt.

5. Pose (1) nach Anspruch 4, bei der der Halteabschnitt (29) des Halteelements (19) einen Ring, eine Schlinge oder einen Haken umfasst, durch den bzw. die im Gebrauch eine Angelschnur verläuft.

6. Pose (1) nach Anspruch 4 oder Anspruch 5, bei der der zweite Befestigungsteil (11) eine Öffnung (15) aufweist, durch die der Verbindungsabschnitt (17) des Halteelements (19) so verläuft, dass er zwischen dem ersten (5) und dem zweiten (11) Befestigungsteil eingeschlossen ist.

7. Pose (1) nach Anspruch 6, bei der der Verbindungsabschnitt (17) des Halteelements (19) eine Krümmung (21) zwischen einem Abschnitt (17a) davon, der durch die Öffnung (15) verläuft, und einem anderen Abschnitt (17b) davon, der zwischen dem ersten (5) und dem zweiten (11) Befestigungsteil eingeschlossen ist, aufweist, wobei die Krümmung im Gebrauch im Wesentlichen das Entfernen des Halteelements aus dem Hauptkörper (3) verhindert.

8. Pose (1) nach einem der Ansprüche 4 bis 7, bei der der längliche erste Befestigungsteil (5) und das Innere des Kragens des zweiten Befestigungsteils (11) so angeordnet sind, dass der Verbindungsteil (17) des Halteelements (19) in einem Spalt (23) zwischen ihnen eingeschlossen ist, der für diesen Zweck vorgesehen ist.

9. Pose (1) nach einem der vorhergehenden Ansprüche, bei der ein Abschnitt des ersten Befestigungsteils (5) von dem zweiten Befestigungsteil (11) und dem Rest des Hauptkörpers (3) vorsteht, wobei der Abschnitt ein Zusammenfügemittel umfasst, mit Hilfe dessen eine Posenantenne (31a, 31b) abnehmbar mit der Pose zusammengefügt werden kann.

10. Bausatz aus Teilen für das Bilden einer Pose (1) nach einem der vorhergehenden Ansprüche, der den Hauptkörper (3), den ersten Befestigungsteil (5), den zweiten Befestigungsteil (11) und das Halteelement (19) umfasst.

11. Bausatz nach Anspruch 10 bei Abhängigkeit von Anspruch 9, der des Weiteren mindestens eine Antenne (31a, 31b) umfasst.

## Revendications

1. Flotteur de pêche à la ligne (1) comprenant :
(a) un corps principal (3) comprenant une première pièce d'attache allongée (5) ;
(b) une seconde pièce d'attache (11) généralement sous la forme d'un collier situé sur la première pièce d'attache allongée (5) dans un engagement conjugué ; et
(c) un élément de retenue (19) pour retenir le flotteur sur une ligne en cours d'utilisation ; dans lequel l'élément de retenue est relié au corps principal (3) en étant bloqué entre les première (5) et seconde (11) pièces d'attache ;
**caractérisé en ce que** le collier de la seconde pièce d'attache (11) est retenu sur la première pièce d'attache allongée (5) en étant bloqué entre une bride (13) ou autre saillie de la première pièce d'attache (5) et une partie du corps principal (3).

2. Flotteur (1) selon la revendication 1, dans lequel la première pièce d'attache (5) est séparée du reste du corps principal (3) mais fixée à celui-ci.

3. Flotteur (1) selon la revendication 2, dans lequel la première pièce d'attache (5) est fixée au reste du corps principal (3) dans un alésage (7) de celui-ci.

4. Flotteur (1) selon l'une quelconque des revendications précédentes, dans lequel l'élément de retenue (19) comprend une portion de retenue (29) qui retient le flotteur sur une ligne en cours d'utilisation, et une portion de connexion (17) s'étendant depuis la portion de retenue, la portion de connexion (17) étant bloquée entre les première (5) et seconde (11) pièces d'attache, et la portion de retenue (29) faisant saillie depuis les première et seconde pièces d'attache.

5. Flotteur (1) selon la revendication 4, dans lequel la portion de retenue (29) de l'élément de retenue (19) comprend un anneau, une boucle ou un crochet à travers lequel une ligne s'étend en cours d'utilisation.

6. Flotteur (1) selon la revendication 4 ou la revendication 5, dans lequel la seconde pièce d'attache (11) comprend un orifice (15) à travers lequel la portion de connexion (17) de l'élément de retenue (19) s'étend de sorte qu'elle est bloquée entre les première (5) et seconde (11) pièces d'attache.

7. Flotteur (1) selon la revendication 6, dans lequel la portion de connexion (17) de l'élément de retenue (19) comprend une courbure (21) entre une section (17a) de celui-ci s'étendant à travers l'orifice (15) et une autre section (17b) de celui-ci bloquée entre les première (5) et seconde (11) pièces d'attache, la courbure empêchant essentiellement le retrait de l'élément de retenue du corps principal (3) en cours d'utilisation.

8. Flotteur (1) selon l'une quelconque des revendications 4 à 7, dans lequel la première pièce d'attache allongée (5) et l'intérieur du collier de la seconde pièce d'attache (11) sont agencés de sorte que la portion de connexion (17) de l'élément de retenue (19) est bloquée dans un espace (23) entre eux, prévu à cette fin.

9. Flotteur (1) selon l'une quelconque des revendications précédentes, dans lequel une section de la première pièce d'attache (5) fait saillie depuis la seconde pièce d'attache (11) et le reste du corps principal (3), ladite section comprenant des moyens de liaison par lesquels une antenne de flotteur (31a, 31b) peut être reliée de manière amovible au flotteur.

10. Kit de pièces pour former un flotteur (1) selon l'une quelconque des revendications précédentes, comprenant ledit corps principal (3), la première pièce d'attache (5), la seconde pièce d'attache (11) et l'élément de retenue (19).

11. Kit selon la revendication 10 lorsqu'elle dépend de la revendication 9, comprenant en outre au moins une dite antenne (31a, 31b).
